# EUROPEAN PATENT APPLICATION

(11) **EP 4 443 578 A1**
(43) Date of publication of application: **09.10.2024**
(21) Application number: 22901780.1
(22) Date of filing: 30.11.2022
(51) Int. Cl.: H01M 10/04, H01M 50/531, H01M 50/538

(54) **RESISTANCE-REDUCED CYLINDRICAL BATTERY**

(30) Priority: 01.12.2021 KR 20210169768
(71) Applicant: LG Energy Solution, Ltd., Seoul 07335 (KR)
(72) Inventor: LIM, Hae Jin, Daejeon 34122 (KR)
(74) Representative: Goddar, Heinz J.
(86) International application number: PCT/KR2022/019219
(87) International publication number: WO 2023/101422

(57) **Abstract**

An electrode assembly includes an electrode stack having a first electrode, a first separation layer, a second electrode and a second separation layer consecutively stacked, the electrode stack being wound around a winding axis in a winding direction, and a first electrode tab electrically connected to the first electrode, the first electrode tab protruding in an axial direction away from a first end of the first electrode. The second electrode includes a second electrode uncoated portion where an active material is not coated, the second uncoated portion being exposed at a second end of the second electrode in the axial direction, the second uncoated portion being configured to be a second electrode tab. A battery cell including the electrode assembly is also provided.

## Description

### [Technical Field]

This application claims priority to and the benefit of Korean Patent Application No. 10-2021-0169768 filed on December 1, 2021, the disclosure of which is incorporated herein by reference in its entirety.

The present disclosure relates to a cylindrical cell comprising a jelly roll-type electrode assembly, and in particular, a cylindrical cell in which an anode and a cathode respectively have a tab structure and a tabless structure.

### [Background Art]

Secondary cells are universally applied to an electric vehicle (EV) or a hybrid electric vehicle (HEV) driven by an electric driving force, as well as a mobile device since they are highly applicable to different product groups and exhibit electrical properties such as high energy density and the like.

A secondary cell is hailed as a novel energy source for protecting the environment and enhancing energy efficiency, thanks to its good points such as generation of no byproduct following energy consumption as well as a significant reduction in the consumption of fossil fuels.

Secondary cells that are currently used in a wide range comprise a lithium-ion cell, a lithium-polymer cell, a nickel-cadmium cell, a nickel-hydrogen cell, a nickel-zinc cell and the like. The operation voltage of a secondary cell unit, i.e., a battery cell unit, is about 2.5 V to 4.5 V. In the case where an output voltage greater than the operation voltage is required, a plurality of battery cells connects in series to constitute a battery pack. Additionally, a plurality of battery cells connects in parallel to constitute a battery pack, depending on charging and discharging capacity required of the battery pack. The number and electrical connection of battery cells included in the battery pack may be set differently, depending on a required output voltage and/or required charging and discharging capacity.

Secondary cell units comprise a cylindrical battery cell, an angular/a rectangular battery cell, and a pouch-type battery cell. In the case of a cylindrical battery cell, a separation layer as an insulator is interposed between an anode and a cathode, they are wound to form a jelly roll-type electrode assembly, and the electrode assembly is inserted into a cell can to form a cell. Additionally, a strip-shaped electrode tab can connect to an uncoated portion of each of the anode and the cathode, and electrically connect between the electrode assembly and an electrode terminal exposed outward. A positive electrode terminal is a cap plate of a sealing body sealing the opening of a cell can, and a negative electrode terminal is a cell can. In a conventional cylindrical battery cell having the above-described structure, current concentrates on the strip-shaped electrode tab coupled with the anode uncoated portion and/or the cathode uncoated portion, causing an increase in resistance, generating large amounts of heat and causing deterioration in current collection efficiency.

The resistance and heat generation of a small-sized cylindrical battery cell having the 18650 form factor are not a big issue. However, in a large-capacity cylindrical battery cell, as inner resistance increases, large amounts of heat is generated near the electrode tab during a rapid charging process, and a fire breaks out in the cylindrical battery cell.

As part of an effort to solve the problems, the number of electrode tabs increases to widen a current path, and an electrode tab is disposed at the central side of an electrode before the winding to shorten a current path. Electrical resistance is inversely proportional to the surface area of a path in which current flows, and proportional to the length of a current path. Considering the fact, electrical resistance can be reduced.

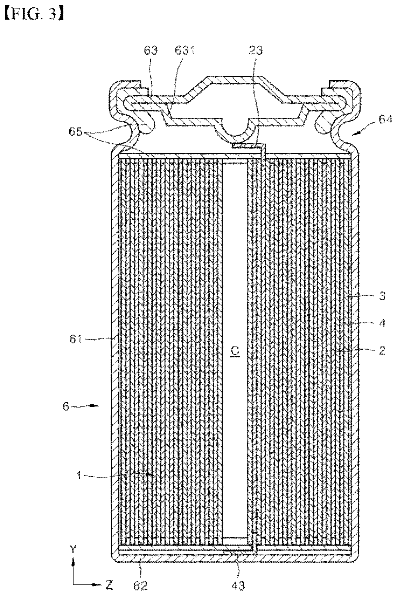

FIG. 3 is a cross-sectional view showing a cylindrical cell comprising a jelly roll-type electrode assembly having a tab structure. Current connects to a cell can lid 63 or a cell can 6 only through an anode tab 23 or a cathode tab 43 provided in one or two points of each of an anode 2 and a cathode 4, at both of the anode 2 and the cathode 4. At this time, the surface area of a current path is narrowed, causing an increase in resistance.

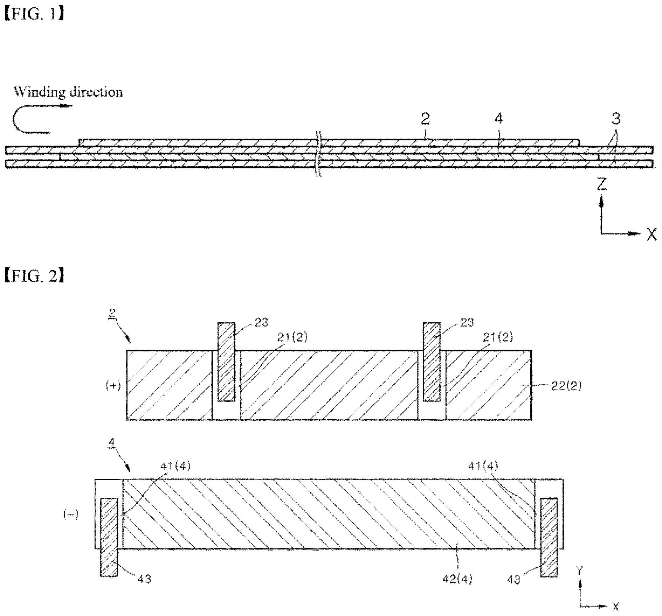

FIGS. 1 and 2 are views showing a state before an anode and a cathode constituting a jelly roll-type electrode assembly with a tab structure are wound. Referring to the drawings, the length of the anode 2 is less than the length of the cathode 4, and two anode tabs 23 are disposed in the central portion of the anode 2. The cathode 4 is wound radially further outward than the anode 2, the length of the cathode 4 is greater than the length of the anode 2, and the cathode tab 43 has to be disposed at both ends of the cathode 4 during manufacturing. At the anode 2, a decrease in the length of a current path leads to a significant decrease in resistance. In particularly, another method for reducing resistance at the cathode 4 is required.

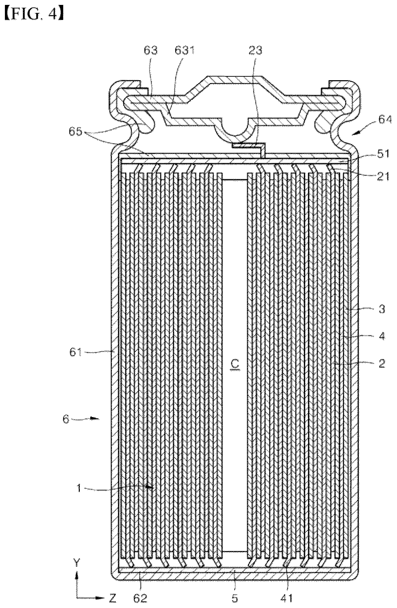

Additionally, a jelly roll cell that has a tabless structure and uses no electrode tab can be used to reduce resistance. FIG. 4 is a cross-sectional view showing a cylindrical cell comprising a jelly roll-type electrode assembly having a tabless structure. Referring to FIG. 4, an anode uncoated portion 21 on which an active material is not coated protrudes from one side of the anode 2 in the axial direction thereof, and a cathode uncoated portion 41 on which an active material is not coated protrudes from the other side of the cathode 4 in the axial direction thereof. Each of the uncoated portions 21, 41 welds to a current collection plate 5 and entirely serves as an electrode tab. Thus, the surface area of a current path can expand, and resistance can remarkably decrease. At this time, each of the uncoated portions 21, 41 can radially bend and form a flat surface to improve welding performance to the current collection plate 5.

In the tabless structure, during a weld of the uncoated portions 21, 41 to the current collection plate 5 or a bend of the uncoated portions 21, 41 to improve welding properties, a short circuit is highly likely to occur between the cathode and the anode. Further, in the tabless structure, an insulation layer 65 is additionally needed to insulate between the anode current collection plate and a cell can, and the length of the cell can in the axial direction thereof needs to increase by the thickness of the anode uncoated portion 21 and the current collection plate 5, reducing cell capacity.

Furthermore, the thickness of a portion of the jelly roll-type electrode assembly, connecting to a tab, is greater than the thickness of a portion of the electrode assembly, connecting to no tab. Accordingly, the radius of the jelly roll in a portion of the electrode assembly wound in a jelly roll shape, where a tab is disposed in the perimeter direction of the electrode assembly, is greater than the radius of the jelly roll in a portion of the electrode assembly, where not tab is disposed. Because of a difference in the radii, the portion where a tab is disposed is pressurized further than the portion where no tab is disposed, during the repetitive charging and discharging of the cell. Accordingly, the hollow hole part of the winding center can collapse, or attached layers can separate, worsening degradation rapidly.

### [Description of Invention]

### [Technical Problems]

The objective of the present disclosure is to provide a jelly roll-type electrode assembly and a cylindrical cell comprising the electrode assembly that ensures a reduction in the resistance of a second electrode the resistance of which hardly decreases based on improvement in its tab structure, in both electrodes.

The objective of the present disclosure is to provide an economical electrode assembly and a cylindrical cell comprising the electrode assembly that ensures simplification of a structure and a manufacturing process, enhances spatial availability and increases capacity.

The objective of the present disclosure is to provide an electrode assembly and a cylindrical cell comprising the electrode assembly that minimizes the possibility of a short circuit between a first electrode and a second electrode without excessive insulation.

The objective of the present disclosure is to provide an electrode assembly and a cylindrical cell comprising the electrode assembly that minimizes the degradation of the cell, caused by the thickness of a tab in the case where one or two or more tabs are used to reduce resistance.

The objective of the present disclosure is to provide a battery pack comprising the improved cylindrical battery cell and a vehicle comprising the battery pack.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

### [Technical Solutions]

In the present disclosure, to constitute an electrode assembly of a jelly roll shape in which an electrode stack, where a first electrode, a second electrode and a separation layer are stacked, is wound, and the first electrode and the second electrode are alternately stacked radially with the separation layer between the first electrode and the second electrode, the first electrode is provided with a first electrode uncoated portion on which an active material is not coated, a first electrode tab electrically connected to the first electrode uncoated portion protrudes from one side of the electrode assembly in the axial direction thereof, and the second electrode has a second electrode uncoated portion on which an active material is not coated, in the end portion of the other side thereof in the axial direction thereof and which serves as a tab.

The first electrode uncoated portion may be provided in an area corresponding to the area where an active material is coated, axially.

The first electrode uncoated portion may be elongated from the end portion of the area where an active material is coated, in the axial direction thereof, to the outside further in the axial direction thereof.

The first electrode uncoated portion may be provided entirely or partially in the lengthwise direction of the first electrode.

One or a plurality of first electrode uncoated portions and first electrode tabs may be provided.

In the case where a plurality of first electrode tabs is provided, the first electrode tabs overlap one another and electrically connect to one another to form a single tab.

In the case where one first electrode tab is provided, the first electrode tab may connect to the first electrode in a position where the first electrode tab avoids both end portions of the first electrode in the winding direction thereof.

In the case where two or more first electrode tabs are provided, the first electrode tabs may connect to the first electrode in a position where the first electrode tabs avoid both end portions and a central portion of the first electrode in the winding direction thereof.

In the case where one first electrode tab is provided, the first electrode may be divided into three portions along a widthwise direction, and the first electrode tab may connect to the first electrode in a position of the first electrode except for both the end portions of the first electrode in the winding direction thereof, to prevent an increase in resistance caused by a lengthened current path.

In the case where two first electrode tabs are provided, the first electrode may be divided into four portions along the widthwise direction, and the first electrode tab may respectively connect to the first electrode in two positions of the first electrode except for both the end portions of the first electrode in the winding direction thereof, to prevent an increase in resistance caused by a lengthened current path. In the case where three or more first electrode tabs are provided, the first electrode tabs electrically connect to the first electrode in the above-mentioned way to shorten a current path.

In the above method of disposing the first electrode tab, the plurality of first electrode tabs may be radially disposed in different radiuswise positions.

In an electrode assembly where the plurality of first electrode tabs connects to an area corresponding to the area where an active material is coated axially, the circumferencewise positions of the first electrode tabs may not overlap one another.

In an electrode assembly where the plurality of first electrode tabs connects to the first electrode uncoated portion elongated from the end portion of the area where an active material is coated, in the axial direction thereof, to the outside further in the axial direction thereof, the circumferencewise positions of the first electrode tabs may overlap one another.

The first electrode tabs may connect to the first electrode in a position where the first electrode tabs connect to each other readily in the state where the electrode assembly is wound.

The second electrode uncoated portion may be provided in a way that the second electrode uncoated portion is formed continuously in the end portion of the other side of the second electrode in the axial direction thereof, along the winding direction, or may be provided in a way that the second electrode uncoated portion is notched discontinuously along the winding direction.

A height at which the second electrode uncoated portion protrudes axially may increase continuously or discontinuously.

The second electrode uncoated portion may bend radially to improve welding performance to a current collection plate or a cell can bottom surface that are described hereafter.

The current collection plate may be coupled to the second electrode uncoated portion. For example, the current collection plate may be coupled to the surface of the second electrode uncoated portion that is bent radially, based on welding.

The axiswise lengths of the second electrode and the separation layer may be greater than the axiswise length of the first electrode.

The end portion of one side of the first electrode in the axial direction thereof may be disposed lower than the end portion of one side of the second electrode in the axial direction thereof.

A distance between the axiswise end portions of one sides of the first electrode and the second electrode may be less than a distance between the axiswise end portion of the other side of the first electrode and a point where the second electrode uncoated portion starts.

In the present disclosure, provided is a cylindrical cell comprising the electrode assembly.

The cylindrical cell may comprise a cylindrical cell can having an axiswise one lateral surface that is open. The electrode assembly may be accommodated in the cell can, with the second electrode uncoated portion facing the cell can bottom surface, and the second electrode uncoated portion may electrically connect to the cell can bottom surface. The first electrode tab may electrically connect to a cell can lead (cap) covering the upper portion of the cell can.

A beading part may be provided on a lateral surface of the cell can, in a way that a lateral wall of the cell can, between the end portion of one side of the electrode assembly in the axial direction thereof and the cell can lead, is depressed inward and radially.

An insulation layer may be provided in the first electrode tab portion, and insulate the first electrode tab from the cell can and the second electrode.

The insulation layer may cover one later surface of the electrode assembly in the axial direction thereof and allow the first electrode to pass and connect to the cell can lead.

The insulation layer may be provided in a portion of the first electrode, which is adjacent to the second electrode.

The above-described solutions can be applied to a battery pack comprising the cylindrical battery cell, and a vehicle comprising the batter pack. Battery packs and vehicles including a cylindrical battery cell are well known to one having ordinary skill in the art, and description in relation to them is omitted herein.

### [Advantageous Effects]

In the present disclosure, provided is a jelly roll-type electrode assembly in which a tabless structure is applied to a second electrode the resistance of which hardly decreases based on improvement in its tab structure, in both electrodes, ensuring a decrease in resistance.

In the present disclosure, an improved tab structure is applied to a first electrode the resistance of which decreases sufficiently based on improvement in its tab structure, preventing deterioration in spatial availability and complication of a manufacturing process that are caused by an increase in the thicknesses of a first electrode uncoated portion and a current collection plate welded to the first electrode uncoated portion, and by insulation of the first electrode uncoated portion and the current collection plate from a cell can and the second electrode, in the case where a tabless structure is applied to the first electrode.

In the present disclosure, one or two or more tabs applied to reduce resistance connect to an uncoated portion provided in the end portion of the electrode, outside an area where an active material is coated, axially, such that the tab is not interposed between coating areas of the electrodes where an active material is coated, despite an increase in the number of tabs, preventing thermal degradation caused by a different thickness of a tab.

In the present disclosure, two or more tabs applied to reduce resistance are disposed in positions where the two or more tabs correspond to one another circumferentially when the two or more tabs axially connect to an uncoated portion provided in the end portion of the electrode, outside the area where an active material is coated, ensuring ease of assembly such as the overlap and weld of tabs and the connection of tabs to a lead, and the like.

In the present disclosure, two or more tabs applied to reduce resistance are disposed not to overlap each other circumferentially, even if the two or more tabs connect to an uncoated portion axially provided in an area corresponding to the active material coated area, suppressing thermal degradation caused by different thicknesses of the tabs.

In the present disclosure, provided is an electrode assembly in which without excessive insulation that is required when a tabless structure is also applied to the first electrode, a short circuit between the first electrode and the second electrode may be blocked axially at both end portions of the electrodes.

In the present disclosure, provided is an improved cylindrical battery cell comprising the improved electrode assembly, a battery pack comprising the battery cell, and a vehicle comprising the battery pack.

According to the present disclosure, various different effects can be produced, and the effects are described with reference to each embodiment. Additionally, description of effects readily inferred by one having ordinary skill in the art, and the like are omitted.

### [Brief Description of Drawings]

FIG. 1 is a view showing that an electrode stack is wound in a jelly roll shape before forming an electrode assembly.
FIG. 2 is a planar view showing a state before the winding of a first electrode and a second electrode having a tab structure.
FIG. 3 is a cross-sectional view showing a cylindrical cell comprising an electrode assembly having a tab structure.
FIG. 4 is a cross-sectional view showing a cylindrical cell comprising an electrode assembly having a tabless structure.
FIG. 5 is a planar view showing a state before the winding of a first electrode and a second electrode that is provided with an uncoated portion continuously in the end portion of the other side of the second electrode in the axial direction thereof, in one embodiment.
FIG. 6 is a planar view showing a state before the winding of a first electrode and a second electrode that is provided with an uncoated portion notched discontinuously in the end portion of the other side of the second electrode in the axial direction thereof, in one embodiment.
FIG. 7 is a cross-sectional view showing an electrode assembly in which a first electrode tap connects to the first electrode, and an uncoated portion protruded from the other side of the second electrode in the axial direction thereof and bended is provided at the second electrode, in one embodiment.
FIG. 8 is a view showing the electrode assembly in which a current collection plate connects to the uncoated portion of the second electrode, bent in FIG. 7, in one embodiment.
FIG. 9 is an enlarged cross-sectional view showing the electrode assembly in which the axiswise length of the first electrode is less than the axiswise length of the second electrode, in one embodiment.
FIG. 10 is an enlarged cross-sectional view showing the electrode assembly in which a distance between the axiswise end portions of one sides of active material-coated areas of the first electrode and the second electrode of FIG. 9 is less than a distance between the axiswise end portions of the other sides of the active material-coated areas of the first electrode and the second electrode of FIG. 9.
FIG. 11 is a cross-sectional view showing a cylindrical cell in which one lateral surface of an electrode assembly in the axial direction thereof is covered with an insulation layer, in one embodiment.
FIG. 12 is a cross-sectional view showing a cylindrical cell in which a portion of a first electrode tab is only covered with an insulation layer, in one embodiment.
FIGS. 15 to 17 are planar views showing a first electrode and a second electrode in other embodiments.
FIG. 18 is a perspective view showing a jelly roll-type electrode assembly in which the first electrode and the second electrode in FIGS. 15 to 17 are included and wound.
FIG. 19 is a lateral cross-sectional view of FIG. 18.
FIG. 20 is a view showing a second electrode in another embodiment.
FIG. 21 is an enlarged cross-sectional view showing a stack structure using the second electrode in FIG. 20.
FIG. 22 is a perspective view showing a battery pack comprising a cylindrical battery cell in the present disclosure.
FIG. 23 is a perspective view showing a vehicle comprising the battery pack in FIG. 22.

### [Description of reference numerals]

1: Electrode assembly 2: First electrode 21: First electrode (anode) uncoated portion 22: First electrode (anode) active material 23: First electrode (anode) tab 3: Separation layer 4: Second electrode (cathode) 41: Second electrode (cathode) uncoated portion 42: Second electrode (cathode) active material 43: Second electrode (cathode) tab 44: Insulation coating layer 5: Current collection plate 51: First electrode (anode) current collection plate 52: Second electrode (cathode) current collection plate 6: Cell can 61: Lateral wall 62: Bottom surface 63: Lid 631: First electrode terminal 633: Vent 64: Beading part 65: Insulation layer C: Battery cell P: Battery pack V: Vehicle

### [Detailed Description of Exemplary Embodiments]

The above-described aspects, features and advantages are specifically described hereafter with reference to the accompanying drawings such that one having ordinary skill in the art to which the present disclosure pertains can embody the technical spirit of the disclosure easily. In the disclosure, detailed description of known technologies in relation to the subject matter of disclosure is omitted if it is deemed to make the gist of the disclosure unnecessarily vague. Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component, unless stated to the contrary.

Throughout the disclosure, each component can be provided as a single one or a plurality of ones, unless explicitly stated to the contrary.

When any one component is described as being "in the upper portion (or lower potion)" or "on (or under)" another component, any one component can be directly on (or under) another component, but an additional component can be interposed between any one component and another component on (or under) any one component.

When any one component is described as being "connected", "coupled", or "connected" to another component, any one component can be directly connected or coupled to another component, but an additional component can be "interposed" between the two components or the two components can be "connected", "coupled", or "connected" by an additional component.

The singular forms "a", "an" and "the" are intended to include the plural forms as well, unless explicitly indicated otherwise. It is to be understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the phrase "A and/or B" as used herein can denote A, B or A and B, and the phrase "C to D" can denote C or greater and D or less, unless stated to the contrary.

In the present disclosure, a direction along the lengthwise direction of the winding axis of an electrode assembly wound in a jelly roll shape is referred to as an axial direction Y, for convenience of description. Additionally, a direction in which the winding axis is surrounded is referred to as a circumferential direction or a perimeter direction X. Further, a direction closer to the winding axis or farther from the winding axis is referred to as a radiuswise direction or a radial direction Z. Specifically, a direction closer to the winding axis is referred to as a centripetal direction, and a direction farther from the winding axis is referred to as a centrifugal direction.

In the present disclosure, provided are a structure of a jelly roll electrode assembly capable of reducing resistance, improving spatial availability and preventing a short circuit, and a structure of a cylindrical battery cell comprising the electrode assembly.

Hereafter, preferred embodiments in the present disclosure are described with reference to the accompanying drawings.

First of all, a tab structure and a tabless structure of a cylindrical cell, and a manufacturing method thereof are described. Ordinarily, a cylindrical cell is manufactured by building an electrode assembly, wound in a jelly roll shape, into a cell can.

FIG. 1 is a view showing that an electrode stack is wound in a jelly roll shape before forming an electrode assembly. Referring to FIG. 1, the jelly roll-shaped electrode assembly may be formed in a way that an electrode stack, in which roll sheets of a first electrode 2, a separation layer 3, a second electrode 4 and a separation layer 3 are stacked consecutively, is wound. Accordingly, the jelly roll-shaped electrode assembly may be formed into a circular pipe having a hollow hole in the winding axis portion. That is, the lengthwise direction X of the electrode stack corresponds to the winding direction, i.e., the circumferential direction (the perimeter direction) of the cylindrical electrode assembly, the widthwise direction Y of the electrode stack corresponds to the axial direction of the electrode assembly, and the tangent line direction Z of the electrode stack corresponds to the radiuswise direction (the centripetal direction or the centrifugal direction) of the electrode assembly.

The separation layers may be made of the same material and have the same shape, regardless of their positions in the stack. The separation layer may be made of a material and has a shape, such that the separation layer insulates between the first electrode 2 and the second electrode 4 to prevent an electrical circuit of both the electrodes in the electrode stack and transmits electrolytes described hereafter.

The separator includes a porous polymer substrate, and a porous coating layer located on both surfaces of the porous polymer substrate and including inorganic particles and a binder polymer.

The porous polymer substrate may be a polyolefin-based porous substrate.

The polyolefin porous substrate may be in the form of a film or a non-woven web. By having the porous structure as described above, the electrolyte may be smoothly moved between the positive electrode and the negative electrode. The porous structure may increase an electrolyte impregnation property of the substrate itself so that excellent ion conductivity may be secured, and may prevent an increase in resistance inside an electrochemical device so that performance degradation of the electrochemical device may be prevented.

The polyolefin porous substrate used in the present invention may be any planar porous substrate that is generally used in electrochemical devices, and the material or shape thereof may be variously selected as desired.

The polyolefin porous substrate may include, but is not limited to, high density polyethylene, low density polyethylene, linear low density polyethylene, ultrahigh molecular weight polyethylene, or polypropylene, or may be a film or non-woven web formed of a mixture of two or more thereof.

The polyolefin porous substrate may have a thickness of 8 to 30 µm, but this is only an example, and the polyolefin porous substrate may also have a thickness that is out of the above range in consideration of mechanical properties or high-efficiency charge/discharge characteristics of a cell.

A woven fabric sheet in the present disclosure may be made of polyethylene (PE), polypropylene (PP), or a mixture of two or more thereof. For example, the woven fabric sheet may be manufactured based on fiber spinning. For example, the woven fabric sheet may be manufactured in a way that fibers of the above materials are fabric-spinned and mixing-spinned at a melting point or greater, based on melt blowing.

The woven fabric sheet may have an elongation rate of 200 to 400 %, preferably, 300 to 400 %. In the case of an elongation rate of less than 200 %, contact between an electrode and an electrode is highly likely to occur at a time when a nail penetrates, and in the case of an elongation rate of greater than 400 %, a surrounding portion where a nail penetrates is also elongated, and the separation layer becomes thin, resulting in a reduction in the barrier properties (blockability).

The woven fabric sheet has a plurality of pores having an average diameter of 0.1 to 10 µm. In the case of a pore having a size of less than 0.1 µm, a smooth flow of lithium ions and/or liquid electrolytes/an electrolyte solution is not ensured, and in the case of a pore having a size of greater than 0.1µm, contact between a positive electrode and a negative electrode may not be prevented, since the woven fabric sheet is elongated at a time when a nail penetrates.

Additionally, the woven fabric sheet may have porosity of 40 to 70 %. In the case of porosity of less than 40 %, a smooth flow of lithium ions and/or electrolyte solution may not be ensured, and in the case of porosity of greater than 70 %, contact between a positive electrode and a negative electrode may not be prevented, since the woven fabric sheet is elongated at a time when a nail penetrates. The woven fabric sheet manufactured as described above may have permeability of 1 to 20 seconds/100 mL.

Further, the woven fabric sheet may have a thickness of 10 to 20 µm, and the numerical values are provided as an example. The woven fabric sheet may have a thickness outside the above-mentioned range of thicknesses, depending on the permeability of the woven fabric sheet.

The woven fabric sheet may be coupled to the components of the separation layer that is disposed under the woven fabric sheet, based on lamination. The lamination process may be performed at a temperature range of 100 to 150 °C.In the case where the lamination process is performed at less than 100 °C, the lamination effect is not produced, and in the case where the lamination process is performed at greater than 150 °C, a portion of the woven fabric melts.

Under the above-mentioned conditions, the lamination-coupled separation layer in one aspect ensures improvement in resistance against nail penetration, unlike a separation layer which is comprised of a conventional woven fabric sheet, or a separation layer in which a layer comprising inorganic particles is formed on at least one surface of a film or a woven fabric sheet.

In the porous coating layer, the inorganic particles bind one another in the state of being charged and contacting each other, with the help of the binder polymer. Accordingly, interstitial volume is formed among the inorganic particles, and the interstitial volume among the inorganic particles may be a vacant space and form a pore.

As an inorganic particle used to form the porous coating layer, inorganic particles, i.e., inorganic particles that cause no oxidation and/or reduction reaction within an operation voltage range (e.g., 0 to 5V with respect to Li/Li⁺) of an electrochemical element, may be further added. In the case where inorganic particles capable of delivering ions are used as the inorganic particle, an increase in the ion conductance in the electrochemical element may lead to improvement in performance. Additionally, in the case where inorganic particles having high permittivity are used as the inorganic particle, the inorganic particles having high permittivity may contributes to an increase in the dissociation of electrolyte salt, e.g., lithium salt, in liquid electrolytes, and improve ion conductance in an electrolyte solution.

For the above-mentioned reasons, the inorganic particle comprises a high-permittivity inorganic particle of a permittivity constant of 5 or greater, preferably, 10 or greater, an inorganic particle having the ability of deliver lithium ions, and a mixture thereof, preferably.

Unlimited examples of inorganic particles having a permittivity constant of 5 or greater comprise BaTiO₃, Pb(Zr,Ti)O₃(PZT), Pb₁₋ₓLaₓZr_{1-y}Ti_{y}O₃(PLZT), PB(Mg_{1/3}Nb_{2/3})O₃-PbTiO₃(PMN-PT), hafnia (HfO₂), SrTiO₃, SnO₂, CeO₂, MgO, NiO, CaO, ZnO, ZrO₂, Y₂O₃, Al₂O₃, TiO₂, SiC or a mixture thereof and the like.

In particular, inorganic particles such as BaTiO₃, Pb(Zr,Ti)O₃(PZT), Pb₁₋ₓLaₓZr_{1-y}Ti_{y}O₃(PLZT), PB(Mg_{1/3}Nb_{2/3})O₃-PbTiO₃(PMN-PT) and hafnia (HfO₂), described above, exhibit piezoelectricity indicating a potential difference between both surfaces, caused by the generation of charges in the case of elongation or compression based on the application of certain pressure, as well as permittivity indicating a permittivity constant of 100 or greater, thereby preventing an external impact-induced short circuit in two electrodes and ensuring improvement in the reliability of an electrochemical element. Additionally, in the case where the high permittivity inorganic particles and the inorganic particles having the ability to deliver lithium ions, described above, are mixedly used, the effect of preventing an external impact-induced short circuit and improving the reliability of an electrochemical element may be produced further.

The inorganic particles having the ability to deliver lithium ions do not store lithium, while containing lithium, and indicate inorganic particles moving lithium ions. The inorganic particles having the ability to deliver lithium ions can deliver and move lithium ions because of a sort of defect in their particle structures, resulting in improvement in the conductivity of lithium ions in a cell and enhancement in the performance of a cell. Un limited examples of the inorganic particles having the ability to deliver lithium ions comprise lithium phosphate (Li₃PO₄), lithium titanium phosphate (LiₓTi_{y}(PO₄)₃, 0<x<2, 0<y<3) lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13) such as 14Li₂O-9Al₂O₃-38TiO₂-39P₂O₅ and the like, lithium lanthanum titanate (LiₓLa_{y}TiO₃, 0< x < 2, 0 < y < 3), lithium germanium thiophosphate (LiₓGe_{y}P_{z}S_{w}, 0 < x < 4, 0 < y <1, 0 < z < 1, 0 < w < 5) such as Li_{3.25}Ge_{0.25}P_{0.75}S₄ and the like, lithium nitride (LiₓN_{y}, 0 < x < 4, 0 < y < 2) such as Li₃N and the like, SiS₂-based glass (LiₓSi_{y}S_{z}, 0 < x < 3, 0 < y < 2, 0 < z < 4) such as Li₃PO₄-Li₂S-SiS₂ and the like, P₂S₅-based glass (LiₓP_{y}S_{z},0< x<3, 0<y<3, 0< z<7) such as LiI-Li₂S-P₂S₅ and the like, or a mixture thereof and the like.

The size of the inorganic particles of the porous coating layer is not limited, but preferably 0.001 to 10 µm, to form a coating layer of uniform thickness and ensure proper porosity. In the case of an inorganic particle having a size of less than 0.001µm, the dispersibility of the inorganic particle may deteriorate, and in the case of an inorganic particle having a size of greater than 10 µm, the thickness of the porous coating layer increases, mechanical properties deteriorate. Additionally, an excessively large pore is highly likely to cause an internal short circuit at a time of charge and discharge of a cell.

The binder polymer forming the porous coating layer may comprise any one binder polymer selected from a group comprised of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose or a mixture of two or more thereof, but not be limited.

A composition ratio of an inorganic particle to a binder polymer, used for a porous coating layer, is within a range of 50:50 to 99:1, for example, and 70:30 to 95:5, preferably. In the case where the composition ratio of an inorganic particle to a binder polymer is less than 50:50, the polymer is included in large amounts, and the thermal reliability of a separation layer may fail to improve, and may cause a reduction in the vacant space formed among the inorganic particles, resulting in a decrease in the size of a pore and the porosity and deterioration in the performance of a final cell. In the case where the content of the inorganic particle is greater than 99 wt%, the binder polymer is included in very small amounts, and the peel resistance of a porous coating layer may deteriorate. The thickness of the porous coating layer is not limited but is preferably in a range of 0.01 to 20 µm. The pore size and porosity are not limited, but the pore size is preferably in a range of 0.001 to 10 µm, and the porosity is preferably in a range of 10 to 90 %. The pore size and porosity mainly depend on the size of an inorganic particle, and for example, in the case where an inorganic particle having a particle size of 1 µm or less is used, the size of a pore formed is also about 1 µm or less. The above-mentioned pore structure is filled with an electrolyte solution that is injected later, and the electrolyte solution delivers ions. In the case where the pore size and porosity is respectively less than 0.001 µm and 10 %, the porous coating layer acts as a resistance layer, and in the case where the pore size and porosity is respectively greater than 10 µm and 90 %, the mechanical properties of the porous coating layer may deteriorate.

The porous coating layer may be formed in a way that a binder polymer is dissolved or dispersed in a dispersion medium, inorganic particles are added to the dispersion medium, a slurry for forming a porous coating layer is obtained, and the slurry is coated and dried on at least one surface of a base material. Preferably, the dispersion medium has a solubility index similar to that of a binder polymer to be used, and has a low boiling point, to be readily removed after an even mixture. Unlimited examples of available dispersion media comprise acetone, tetrahydrofuran, methylene chloride, chloroform, dimethylformamide, N-methyl-2-pyrrolidone (NMP), cyclohexane, water or a mixture thereof and the like.

After inorganic particles are added to the dispersion solution where the binder polymer is dispersed in the dispersion medium, the inorganic particles are crushed, preferably. At this time, the inorganic particles are crushed for 1 to 20 hours, preferably, and the particle size of the crushed inorganic particles is preferably 0.001 to 10 µm, as described above. An ordinary method may be used to crush the inorganic particles, and in particular, ball milling is preferred.

Then the binder polymer dispersion solution in which the inorganic particles are dispersed is coated and dried on at least one surface of a porous polymer base material, at humidity of 10 to 80 %. The dispersion solution may be coated on the porous polymer base material, based on an ordinary coating method that is known in the art. For example, the ordinary coating method may comprise dip coating, die coating, roll coating, comma coating or a combination thereof.

Additives such as a conductive material and the like may be further added as a component of a porous coating layer, in addition to the above-described inorganic particle and binder polymer.

The separator according to the present invention may have a thickness of 1 to 100 µm or 5 to 50 µm. When the thickness of the separator is less than 1 µm, the function of the separator may not be sufficiently exhibited, and the deterioration of mechanical properties may occur. When the thickness of the separator is greater than 100 µm, cell characteristics may deteriorate during high-rate charging/discharging. In addition, the separator may have a porosity of 40 to 60%, and may have an air permeability of 150 to 300 sec/100 ml.

According to one embodiment of the present invention, the porous polymer substrate may use a polyethylene or polypropylene series. In addition, Al oxide and Si oxide-based coating materials may be used as inorganic particles in the porous coating layer.

When the separator according to one embodiment of the present invention is used, since the porous coating layer is provided on both sides of the porous polymer substrate, a solid electrolyte interface layer may be uniformly formed due to the improvement of impregnation performance with respect to the electrolyte, and superior air permeability may be secured as compared to a conventional single-sided inorganic-coated separator. For example, the air permeability may be within 120 sec/100 cc. In addition, even when the inorganic porous coating layer is provided on both sides of the porous polymer substrate, a thickness comparable to that of the conventional single-sided inorganic-coated separator may be realized. For example, the thickness may be within 15.0 µm.

Further, when the separator according to one embodiment of the present invention is used, the stability of the separator may be improved so that heat- and pressure-resistant properties may be secured. Specifically, it is possible to secure a heat-resistant property having a heat-shrinkage property of 5% or less at 180 °C and secure a puncture strength of 550 gf or more, and damage or penetration of the separator in a step portion may be prevented when core deformation occurs during a cycle of the cell in which the separator is employed.

The first electrode 2 may be an anode, and the second electrode 4 may be a cathode, or vice versa. In the present disclosure, the electrodes are respectively referred to as a first electrode and a second electrode.

The first electrode 2 may be wound further inward than the second electrode 4. Accordingly, the radius of the first electrode 2 is less than the radius of the second electrode 4, from a winding axis, and the circumferencewise length of the first electrode may be less than the circumferencewise length of the second electrode 4 along the winding direction. At this time, the length of the first electrode 2 before a winding may be less than the length of the second electrode 4, before a winding, in the lengthwise direction.

FIG. 2 is a planar view showing a state before the winding of a first electrode and a second electrode having a tab structure. Referring to FIG. 2, an active material 22, 42 may be coated on one surface or both surfaces of each of the first electrode 2 and the second electrode 4. The active material 22, 42 is coated on the surface of the first electrode 2 and the second electrode 4 and involves an electrode reaction by storing ions or releasing ions.

In the present disclosure, any positive electrode active materials coated on an anode plate, and any negative electrode active materials coated on a cathode plate, which are well known in the art, may be used unlimitedly.

The positive electrode active material may include a layered compound or compound substituted with one or more transition metals such as lithium cobalt oxide (LiCoO₂) and lithium nickel oxide (LiNiO₂); lithium manganese oxides (LiMnO₂) such as the chemical formula Li₁₊ₓMn₂ₓO₄ (where x is 0 to 0.33), LiMnO₃, LiMn₂O₃, and LiMnO₂; lithium copper oxide (Li₂CuO₂); vanadium oxides such as LiVsOs, LiFe₃O₄, V₂O₅, and Cu₂V₂O₇; Ni site type lithium nickel oxides expressed by the chemical formula LiNi₁₋ₓMₓO₂ (where M is Co, Mn, Al, Cu, Fe, Mg, B, or Ga and x is 0.01 to 0.3); lithium manganese composite oxides expressed by the chemical formula LiMn₂₋ₓMₓO₂ (where M=Co, Ni, Fe, Cr, Zn, or Ta and x=0.01 to 0.1) or Li₂Mn₃MO₈ (where M=Fe, Co, Ni, Cu, or Zn); LiMn₂O₄ in which Li in the formula is partially substituted with alkaline earth metal ions; a disulfide compound; and Fe₂(MoO₄)₃, or a compound whose main component is a lithium intercalation material such as a composite oxide formed by a combination thereof. Although the above types are used as the positive electrode active material, the present invention is not limited thereto.

For example, the positive electrode current collector has a thickness of 3 to 500 µm. The positive electrode current collector is not particularly limited as long as it has conductivity without causing chemical changes in a cell. Examples of the positive electrode current collector may include stainless steel, aluminum, nickel, titanium, calcined carbon, or aluminum or stainless steel whose surface has been treated with carbon, nickel, titanium, silver, or the like. The electrode current collector may have fine irregularities formed in a surface thereof to increase the adhesion between the electrode current collector and the positive electrode active material. The electrode current collector may be used in various forms such as a film, a sheet, a foil, a net, a porous body, a foamed body, a non-woven fabric body, and the like.

A conductive material may be additionally mixed with positive electrode active material particles. The conductive material is added in an amount of 1 to 50 wt% based on the total weight of the mixture including the positive electrode active material. The conductive material is not particularly limited as long as it has high conductivity without causing chemical changes in a cell. Examples of the conductive material may include graphite such as natural graphite and artificial graphite; carbon black such as carbon black, acetylene black, Ketjen black, channel black, furnace black, lamp black, and thermal black; conductive fibers such as carbon fiber and metal fiber; metal powders such as carbon fluoride, aluminum, and nickel powders; conductive whiskers such as zinc oxide and potassium titanate; conductive oxides such as titanium oxide; and conductive materials such as a polyphenylene derivative.

Further, the negative electrode sheet may be fabricated by applying and drying negative electrode active material particles on a negative electrode current collector, and may further include components such as the conductive material described above, a binder, a solvent, and the like as needed.

For example, the negative electrode current collector has a thickness of 3 to 500 µm. The negative electrode current collector is not particularly limited as long as it has conductivity without causing chemical changes in a cell. Examples of the negative electrode current collector may include copper, stainless steel, aluminum, nickel, titanium, calcined carbon, aluminum or stainless steel whose surface has been treated with carbon, nickel, titanium, silver, or the like, an aluminum-cadmium alloy, or the like. In addition, like the positive electrode current collector, fine irregularities may be formed in the surface to enhance the binding force of the negative electrode active material, and may be used in various forms such as a film, a sheet, a foil, a net, a porous body, a foamed body, a nonwoven fabric body, and the like.

Examples of the negative electrode active material may include a carbon such as non-graphitized carbon or graphite-based carbon; a metal complex oxide such as LiₓFe₂O₃ (0<=x<=1), LiₓWO₂ (0<=x<=1), SnₓMe₁₋ₓMe'yO_{z} (Me: Mn, Fe, Pb, Ge; Me' : Al, B, P, Si, elements in Group I, II, and III on the periodic table, a halogen; 0 <x<=1); 1<=y<=3; 1 <= z <= 8); a lithium metal; a lithium alloy; a silicon-based alloy; a tin-based alloy; an oxide such as SnO, SnO₂, PbO, PbC₂, Pb₂O₃, Pb₃O₄, Sb₂O₃, Sb₂O₄, Sb₂O₅, GeO, GeC₂, Bi₂O₃, Bi₂O₄, or Bi₂O₅; a conductive polymer such as polyacetylene; a Li-Co-Ni-based material, or the like.

A binder polymer capable of being used in the electrode sheets 11 and 12 is a component that assists in bonding the electrode active material particles and the conductive material and binding the electrode active material particles to the electrode current collector, and added in an amount of, for example, 1 to 50 wt% based on the total weight of the mixture including the electrode active material particles. Examples of the binder polymer may include at least one binder polymer selected from the group consisting of polyvinylidene fluoride-co-hexafluoropropylene (PVdF-HFP), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose, or a mixture of two or more thereof, but the present invention is not limited thereto.

Non-limiting examples of the solvent used in the manufacturing of the electrodes include acetone, tetrahydrofuran, methylene chloride, chloroform, dimethylformamide, N-methyl-2-pyrrolidone (NMP), cyclohexane, water, or a mixture thereof. Such solvents provide an appropriate level of viscosity so that a slurry coating layer can be formed at a desired level on a surface of the electrode current collector.

The negative electrode may include a current collector; and a negative electrode active material layer located on at least one surface of the current collector and including a negative electrode active material, a binder polymer, and a conductive material, wherein the negative active material layer includes a lower layer region in surface contact with the current collector and an upper layer region extending to the surface of the negative electrode active material layer while in surface contact with the lower layer region. The lower layer region and the upper layer region may each independently include at least one of graphite and a silicon-based compound as a positive electrode active material.

The lower layer region may include natural graphite as a positive electrode active material, and the upper layer region may include artificial graphite as a positive electrode active material.

Each of the lower layer region and the upper layer region may independently further include a silicon-based compound as a positive electrode active material.

The silicon-based compound may include at least one of SiOₓ(0≤x≤2) and SiC.

In one embodiment, the negative electrode may be manufactured in a way that a slurry for a lower layer comprising a negative electrode active material for a lower layer is applied and dried on a current collector and a lower layer area is formed, and then a slurry for an upper layer comprising a negative electrode active material for an upper layer is applied and dried on the lower layer area and an upper layer area is formed.

Additionally, in one embodiment, the negative electrode may be manufactured based on a method comprising: preparing a slurry for a lower layer comprising a negative electrode active material for a lower layer, and a slurry for an upper layer comprising a negative electrode active material for an upper layer;
coating the slurry for a lower layer on one surface of a negative current collector, and at the same time or after predetermined time, coating the slurry for an upper layer on the slurry for a lower layer; and
drying the coated slurry for a lower layer and the coated slurry for an upper layer at the same time and forming an active material layer.

In the latter manufacturing method, there may be an intermixing region where active materials of different sorts are mixed, in a portion of the negative electrode, wherein the lower layer region and the upper layer region contact each other. In the case where the slurry for a lower layer comprising a negative electrode active material for a lower layer and the slurry for an upper layer comprising a negative electrode active material for an upper layer are coated on a current collector, at the same time or one after another with very little time between them, and then dried at the same time to form an active material layer, a predetermined intermixing section is formed on the interface where the slurry for a lower layer and the sully for an upper layer contact each other before they are dried, and then the intermixing section is formed into a layer of the intermixing region while the slurry for a lower layer and the slurry for an upper layer are dried.

In the negative electrode active material layer of one embodiment of the present disclosure, a weight ratio (or a ratio of loaded amount per unit surface area) between the upper layer region and the lower layer region may be 20:80 to 50:50, specifically, 25:75 to 50:50.

In the present disclosure, the thickness of the lower layer region and the upper layer region of the negative electrode active material layer may not definitely match the thickness of the coated slurry for a lower layer and the coated slurry for an upper layer. However, a ratio of the thickness of the lower layer region to the thickness of the upper layer region of the negative electrode active material layer in the present disclosure, finally obtained after drying or selective rolling, may match a ratio of the thickness of the coated slurry for a lower layer to the thickness of the coated slurry for an upper layer.

The first slurry is coated, and the second slurry is coated on the first slurry, at the same time, or one after another with a predetermined time difference between them. In one embodiment, the predetermined time difference may be 0.6 or less second, or 0.02 to 0.6 second, or 0.02 to 0.06 second, or 0.02 to 0.03 second. The time difference at a time of coating the first slurry and the second slurry is caused by a coating apparatus. It is preferable to coat the first slurry and the second slurry at the same time. A device such as a double slot die and the like may be used to coat the second slurry on the first slurry.

In the step of forming an active material layer, rolling the active material layer may be further included after the drying step. At this time, rolling may be performed based on a method such as roll pressing commonly used in the art, and for example, performed at 1 to 20 MPa and 15 to 30 °C.

The step of forming an active material layer by drying the coated slurry for a lower layer and the coated slurry for an upper layer at the same time is performed with a device where a hot air drier and an infrared drier are combined, based on a method commonly used in the art.

The weight% of a first binder polymer in the solids of the slurry for a lower layer may be the same or greater than the weight% of a second binder polymer in the solids of the slurry for an upper layer. In one embodiment, the weight% of the first binder polymer in the solids of the slurry for a lower layer may be 1.0 to 4.2 times, or 1.5 to 3.6 times, or 1.5 to 3 times greater than the weight% of the second binder polymer in the solids of the slurry for an upper layer.

In the case where a ratio of the weight% of the first binder in the coated slurry for a lower layer to the weight% of the second binder in the coated slurry for an upper layer is within the above-mentioned range, the separation of an electrode layer does not occur since the binder in the lower layer area is not that little, and the resistance of the upper layer portion of an electrode decreases, and rapid charge performance may improve, since the binder of the upper layer area is not that great.

In the solids of the slurry for a lower layer, the weight% of the first binder polymer may be 2 to 30 wt% or 5 to 20 wt% or 5 to 20 wt%, and in the solids of the slurry for an upper layer, the rate (wt%) of the second binder polymer may be 0.5 to 20 wt%, or 1 to 15 wt%, or 1 to 10 wt%, or 2 to 5 w%.

A total rate (wt%) of the first binder polymer and the second binder polymer in the entire solids of the slurry for a lower layer and the slurry for an upper layer may be 2 to 20 wt% or 5 to 15 wt%.

Referring back to FIG. 2, each of the first electrode 2 and the second electrode 4 may be provided with a first electrode uncoated portion 21 and a second electrode uncoated portion 41 where the active material 22, 42 is not coated. Each of the first electrode uncoated portion 21 and the second electrode uncoated portion 41 may be provided with a first electrode tab 23 and a second electrode tab 43 that electrically connect to the first electrode uncoated portion 21 and the second electrode uncoated portion 41, to electrically connect the first electrode 2 and the second electrode 4 to the outside.

One or plurality of first electrode tabs 23 and one or a plurality of second electrode tabs 43 may be provided.

In the case where the second electrode uncoated portion 41 and the second electrode tab 43 have to be provided at both ends of the second electrode 4 in the manufacturing process, the current path of the second electrode 4 is lengthened, causing an increase in the resistance. Additionally, the length of the second electrode 4 is greater than the length of the first electrode 2, the current path of the second electrode 4 is lengthened further, causing more resistance.

FIG. 3 is a cross-sectional view showing a cylindrical cell comprising an electrode assembly having a tab structure. Referring to FIG. 3, the electrode assembly 1 where an electrode stack is wound in a jelly roll shape is accommodated in the cell can 6 one lateral surface of which is open axially.

The first electrode tab 23 connecting to the fist electrode uncoated portion 21 of the electrode assembly 1 connects to a first electrode terminal 631 provided at a cell can lid 63, to connect the first electrode 2 to the cell can lid 63 and the outside electrically. One lateral surface of the electrode assembly 1 in the axial direction thereof, from which the first electrode tab 23 protrudes, may be cover by an insulation layer 65.

The second electrode tab 43 connecting to the second electrode uncoated portion 41 of the electrode assembly 1 connects to a cell can bottom surface 62, to connect the second electrode to the cell can 6 and the outside electrically.

The cell can lid 63 connects to the first electrode 2, and the cell can 6 connects to the second electrode 4. Accordingly, the insulation layer 65 is provided between the cell can lid 63 and the cell can 6 and prevents a short circuit.

A beading part 64 may be provided on a cell can lateral wall 61, over the electrode assembly 1, and radially depressed inward. The beading part 64 may help to accommodate the electrode assembly 2 in the cell can 6 reliably, without a gap in the up-down direction.

However, in the above tab structure, the current paths of the first electrode 2 and the second electrode 4 are only the first electrode tab 23 and the second electrode tab 43, and resistance in the first electrode tab 23 and second electrode tab 43 portions is very high, causing generation of heat and deterioration in performance and durability. Electrical resistance is proportional to the length of a current path, and inversely proportional to the surface area of a current path. Thus, a narrow current path does not help to reduce resistance.

FIG. 4 is a cross-sectional view showing a cylindrical cell comprising an electrode assembly having a tabless structure. Referring to FIG. 4, the electrode assembly 1 where an electrode stack is wound in a jelly roll shape is accommodated in the cell can 6 one lateral surface of which is open axially.

The first electrode uncoated portion 21 and the second electrode uncoated portion 41 protrude from both sides of the electrode assembly 1 in the axial direction thereof, and connect respectively to a current collection plate 5. At this time, the first electrode uncoated portion 21 and the second electrode uncoated portion 41 bend radially, to improve adhesion between a first electrode current collection plate 51 and a second electrode current collection plate 52.

The first electrode current collection plate 51 connecting to the first electrode uncoated portion 21 connects to the first electrode tab 23, and the first electrode tab 23 connects to the cell can lid 63 through the first electrode terminal 631, to connect the first electrode to the outside electrically.

The second electrode current collection plate 52 connecting to the second electrode uncoated portion 41 connects to the cell can bottom surface 62, to connect the second electrode to the cell can 6 and the outside electrically.

The cell can lid 63 connects to the first electrode 2, and the cell can 6 connects to the second electrode 4, such that the insulation layer 65 is provided between the cell can lid 63 and the cell can 6, to prevent a short circuit. Further, the upper surface and lateral surface of the first electrode current collection plate 51 may be covered by the insulation layer 65, to prevent a short circuit between the first electrode current collection plate 51 and the inner wall of the cell can 6.

The beading part 64 may be provided on the cell can lateral wall 61, over the electrode assembly 1, and radially depressed inward. The beading part 64 helps to accommodate the electrode assembly 1 in the cell can 6 reliably, without a gap in the up-down direction.

In the second electrode having a tabless structure, current flows through the second electrode uncoated portion 41, the second electrode current collection plate 52, and the cell can bottom surface 62, and a wide current path is provided at the second electrode 4 side, ensuring a reduction in resistance. However, current flows at the first electrode 2 side through the first electrode tab 23, failing to reduce resistance. Rather, the first electrode uncoated portion 21, the first electrode current collection plate 51, and the insulation layer 65 are added, increasing the length of the cell can 6 in the up-down direction. Thus, in the case of a cylindrical battery cell of the same standard, the length of the electrode assembly 1 decreases, causing a reduction in capacity. Further, in the case where the first electrode uncoated portion 21 and the second electrode uncoated portion 41 bend radially, to improve their adhesion to the current collection plate 5, a short circuit may occur respectively between the first electrode uncoated portion 21 and the second electrode uncoated portion 41, and the end portions of the second electrode 4 and the first electrode 2 in the axial directions thereof, causing deterioration in reliability.

Further, a thermal runaway prevention device (a current interrupt device (CID) and/or a venting structure) may be applied together to the lid 63. However, in the structure where the first electrode uncoated portion 21 bends radially and the current collection plate 5 welds onto the first electrode uncoated portion 21, the inner pressure of the cell can 6 may be prevented from being wholly applied to the CID, the venting structure is covered, and the like, adversely affecting the performance of a cell.

Thus, in the improved structure of the electrode assembly according to the present disclosure, the effects of reducing resistance and improving spatial availability may be produced by the tabless structure, at the second electrode side, and the spatial availability of the tab structure and the reliability against a short circuit may be ensured at the first electrode side that can reduce resistance sufficiently, without a tabless structure.

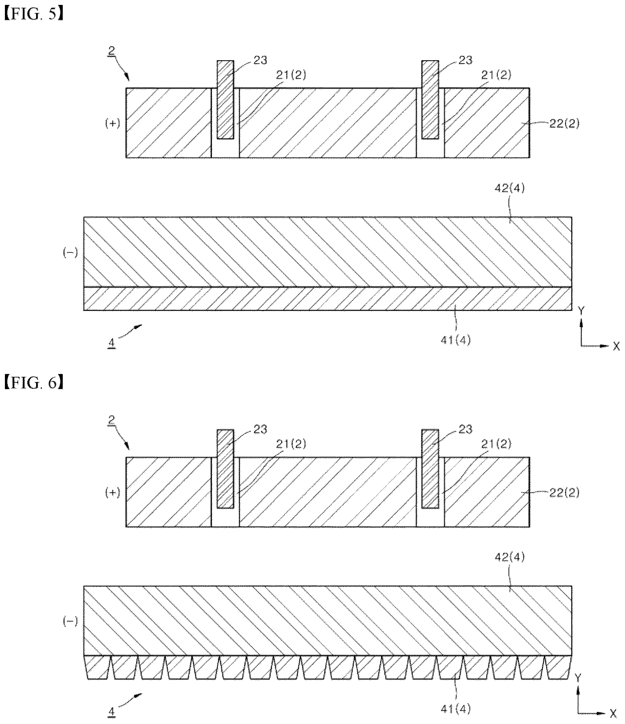

FIG. 5 and FIG. 6 respectively are a planar view showing a state before the winding of a first electrode and a second electrode that is provided with an uncoated portion continuously formed and discontinuously notched in the end portion of the other side thereof in the axial direction thereof, in one embodiment.

Referring to the drawings, the active material 22, 42 is coated on both surfaces of the first electrode 2 and the second electrode 4. The first electrode 2 is provided with a first electrode uncoated portion 21, in a partial section of the lengthwise direction X inside where a section of the first electrode 2 where the active material is applied in the axial direction Y, and the first electrode tab 23 connecting to the first electrode uncoated portion 21 protrudes from one side of the first electrode 2 in the widthwise direction in which is the axial direction after winding. A second electrode uncoated portion 41 is provided and exposed in the end portion of the other side of the second electrode 4, in the widthwise direction thereof.

One or a plurality of first electrode uncoated portions 21 and one or a plurality of first electrode tabs 23 may be provided. In the case where a plurality of first electrode tabs 23 is provided, the current path of the first electrode 2 widens, resulting in a reduction in resistance. As described hereafter, at least a partial surface area of the plurality of first electrode tabs 23 may overlap and connect electrically, after the winding, to form a signal tab. The structure helps to connect the first electrode tab 23 and the lid 63 readily.

The number of the first electrode tabs 23 may be set to a minimum, as long as a resistance value, measured in a path in which the first electrode tab 23 connects to the first electrode 2, drops to a predetermined resistance value or less. For example, in the case where a resistance value, which is measured when two first electrode tabs 23 are used, is the predetermined resistance value or less, two first electrode tabs 23 are enough, and three or greater of first electrode tabs are not needed.

The first electrode uncoated portion 21 and the first electrode tab 23 may be properly disposed, to minimize the current path of the first electrode 2. For example, in the case where a single first electrode uncoated portion 21, and a single first electrode tab 23 are provided, the first electrode uncoated portion 21 and the first electrode tab 23 may be disposed to avoid both end portions in the lengthwise direction of the first electrode when the first electrode 2 is divided along the widthwise direction such that the first electrode 2 is divided into three portions in the lengthwise direction (the winding direction). Further, in the case where the first electrode uncoated portion 21 and the first electrode tab 23 respectively are provided at two points, the first electrode uncoated portion 21 and the first electrode tab 23 may respectively be disposed at two points to avoid both end portions in the lengthwise direction of the first electrode when the first electrode 2 is divided along the widthwise direction such that the first electrode 2 is divided into four portions in the lengthwise direction (the winding direction). In the case where the first electrode uncoated portion 21 and the first electrode tab 23 are provided at three or greater points, the above-described method may be applied.

In the case where a resistance value measured in the position of the first electrode tab 23 is greater than the predetermined resistance value, even when the position of the first electrode tab 23 is properly selected while the number of the first electrode tabs 23 is minimized, the number of the first electrode tabs 23 may be set to a minimum, by adding one more first electrode tab 23 and selecting the position of the first electrode tab 23 properly.

The second electrode uncoated portion 41 may be continuously provided in the lengthwise direction thereof, in the end portion of the other side of the second electrode 4 in the widthwise direction, as illustrated in FIG. 5, or discontinuously notched in the lengthwise direction thereof, as illustrated in FIG. 6. The nothing may be to bend the second electrode uncoated portion 41 described hereafter.

As described above, the separation layer 3 may be interposed and stacked between the first electrode 2 and the second electrode 4, and they may be wound to form a jelly roll-type electrode assembly.

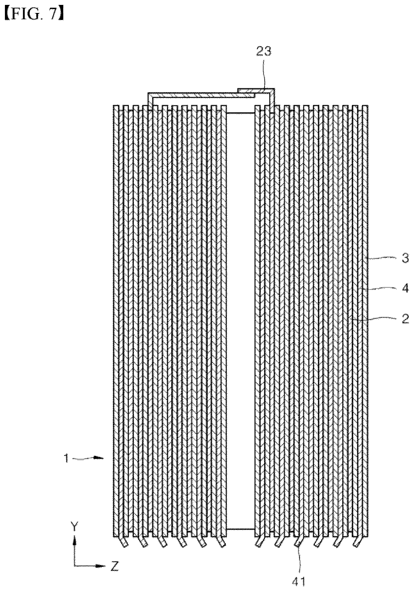

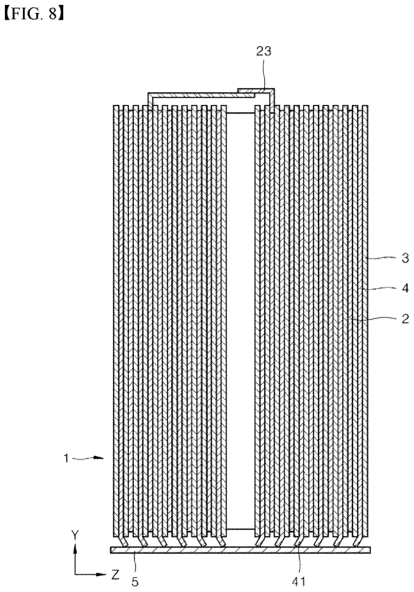

FIG. 7 is a cross-sectional view showing an electrode assembly in which first electrode tabs connects to a first electrode and an uncoated portion protruding and bending from the other side of the second electrode in the axial direction thereof is provided at the second electrode, in one embodiment, and FIG. 8 is a view showing the electrode assembly in which a current collection plate connects to the bending second electrode uncoated portion in FIG. 7, in one embodiment.

Referring to FIG. 7, the second electrode uncoated portion 41 may protrude from the other side of the electrode assembly 1 in the axial direction thereof further than the first electrode 2 and the separation layer 3. The second electrode uncoated portion 41 may bend radially. The radiuswise direction may comprise a centrifugal direction and a centripetal direction. In the embodiments, the second electrode uncoated portion 41 may bend in the centripertal direction, preferably. Accordingly, the second electrode uncoated portion 41 may provide a planar surface at the other side of the electrode assembly, in the axial direction, and improve adhesion performance at a time of adhesion of the second electrode uncoated portion 41 to the current collection plate 5 or the cell can bottom surface 62 that are described hereafter. As a result, the current path widens further, leading to a reduction in resistance.

Referring to FIG. 8, the current collection plate 5 may connect to the surface of the bending second electrode uncoated portion 41. When the second electrode uncoated portion 41 electrically connects to the bottom surface 62 of the cell can 6 at the same time as the electrode assembly 1 is accommodated in the cell can 6 described hereafter, the current collection plate 5 is interposed between the second electrode uncoated portion 41 and the bottom surface 62, enhancing assembly and adhesion reliability.

The first electrode tab 23 protrudes from one side of the electrode assembly 1 axially further than the second electrode 4 and the separation layer 3, even in a winding state. In the case where a plurality of first electrode tabs 23 is provided, the first electrode tabs 23 overlap mutually and electrically connect to one another to form a single tab. Thus, the current path widens, leading to a decrease in resistance.

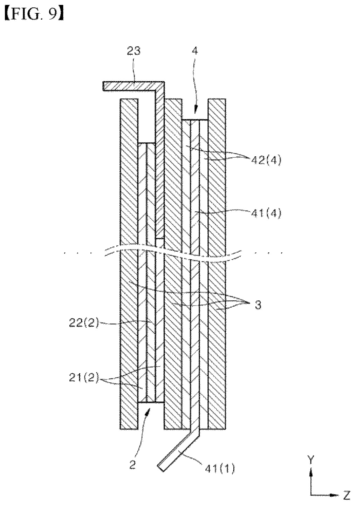

FIG. 9 is an enlarged cross-sectional view showing the electrode assembly in which the axiswise length of the first electrode is less than the axiswise length of the second electrode, in one embodiment. Referring to FIG. 9, while the second electrode uncoated portion 41 bends, a short circuit is likely to occur between the second electrode 4 and the first electrode. Such a short circuit may be prevented by allowing the separation layer 3 to protrude further than the first electrode 2 and the second electrode 4 in both axial directions, in the case of an ordinary jelly roll-type electrode assembly. However, in the tabless structure of the second electrode 4, in the embodiments, the second electrode uncoated portion 41 protrudes from the other side of the second electrode 4 axially further than the separation layer 3, failing to prevent a short circuit.

To prevent a short circuit, the axiswise length of the first electrode 2 may be less than the axiswise length of the second electrode 4. Accordingly, the end portion of the other side of the first electrode 2 in the axial direction thereof may be disposed deeper in the separation layer 3, and the separation layer 3 insulates between the second electrode uncoated portion 41 and the first electrode 2, reducing the possibility of a short circuit.

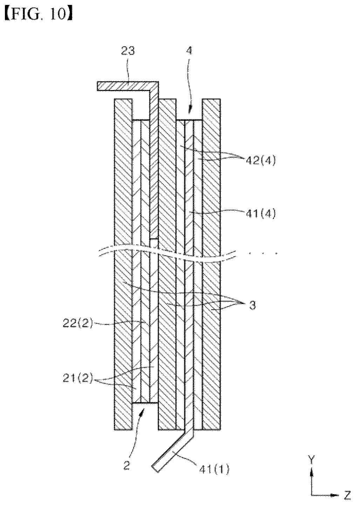

FIG. 10 is an enlarged cross-sectional view showing the electrode assembly in which a distance between the axiswise end portions of one sides of active material-coated areas of the first electrode and the second electrode of FIG. 9 is less than a distance between the axiswise end portions of the other sides of the active material-coated areas of the first electrode and the second electrode of FIG. 9. Referring to FIG. 10, a distance between the axiswise end portion of one side of the first electrode 2 and the axiswise end portion of one side of the second electrode 4 may be less than a distance between the axiswise end portion of the other side of the first electrode 2 and a position of the second electrode, in which the second electrode uncoated portion 41 starts.

Unlike a tabless structure, the tab structure at the first electrode 2 side is less likely to cause a short circuit. The first electrode 2 is not bent and pressurized additionally, and the first electrode tab 23 can be insulated. Accordingly, risk of a short circuit in the tab structure is much less than in the tables structure where the second electrode uncoated portion 41 bends. Thus, in the portion from which the first electrode tab 23 protrudes, a distance between the axiswise end portions of the first electrode 2 and the second electrode 4 may decrease, to ensure improvement in spatial availability and capacity.

To improve spatial availability, the end portion of one side of the first electrode 2 in the axial direction thereof may be disposed in parallel with the end portion of one side of the second electrode 4 in the axial direction thereof, or further inward than the end portion of one side of the second electrode 4 in the axial direction thereof, that is, may have a height the same or less than the height of the end portion of one side of the second electrode 4 in the axial direction thereof. Unlike the end portion of the other side of the first electrode 2 in the axial direction thereof, disposed further inward than the end portion of the other side of the second electrode 4 in the axial direction thereof, at the other side of the electrode assembly in the axial direction thereof where the second electrode uncoated portion 41 is disposed, to avoid a short circuit between the first electrode 2 and the second electrode 4, the end portion of one side of the second electrode 4 in the axial direction thereof is not disposed lower than the end portion of one side of the first electrode 1 in the axial direction thereof to avoid the end portion of one side of the first electrode 1 in the axial direction thereof and the end portion of the first electrode 2 does not protrude over the one side of the second electrode in the axial direction thereof, improving spatial availability and capacity.

The electrode assembly in one embodiment is manufactured in a way that an electrode stack where a first electrode 2, a separation layer 3, a second electrode 4 and a separation layer 3 are consecutively stacked is wound around a winding axis in the winding direction (the lengthwise direction). The first electrode 2 is an anode, and the second electrode 4 is a cathode. When the first electrode 2 is divided along the widthwise direction and divided into four portions in the lengthwise direction, a first electrode tab 23 respectively connects electrically to a first electrode uncoated portion 21 that is provided respectively in two areas except for both end portions of the first electrode 1 in the lengthwise direction thereof. The first electrode tab 23 protrudes from one side in the widthwise direction (the axial direction), and the length of the second electrode 4 is greater than the length of the first electrode 2. A second electrode uncoated portion 41 is provided at the second electrode 4, and discontinuously notched along the end portion of the other side of the second electrode 4 in the widthwise direction thereof, in the lengthwise direction (the winding direction). The second electrode uncoated portion 41 is exposed to the other side of the second electrode 41 in the widthwise direction thereof. In the electrode stack, the height of the end portion of one side of the first electrode 2 in the widthwise direction thereof is the same as the height of the end portion of one side of the second electrode in the widthwise direction thereof. The end portion of the other side of the second electrode 4 in the axial direction thereof and a separation layer 3 protrude and extend further toward the other side in the axial direction thereof than the end portion of the other side of the first electrode 2 in the axial direction thereof. The axiswise length of the first electrode 2 is less than the axiswise length of the second electrode 4, and the center of the first electrode 2 is disposed further upward than the center of the second electrode 4. After being wound, the first electrode tabs 23 protrude from one side of the electrode assembly 1 in the axial direction thereof, and overlap mutually to form a single tab. The second electrode uncoated portion 41 bends in the centripetal direction, and forms a planar surface, and a current collection plate 5 welds to the planar surface that is formed in a way that the second electrode uncoated portion 41 bends.

In the present disclosure, the structure of a cylindrical battery cell comprising the improved electrode assembly is also provided.

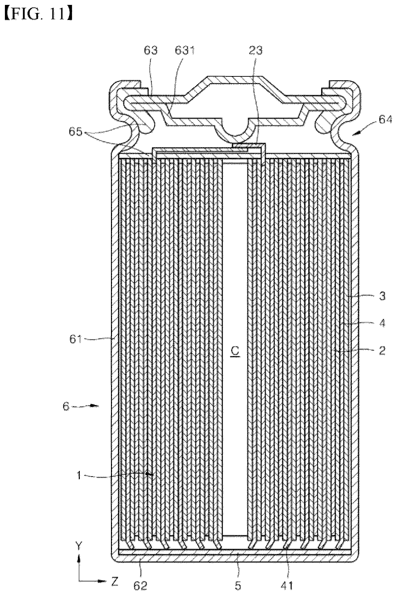

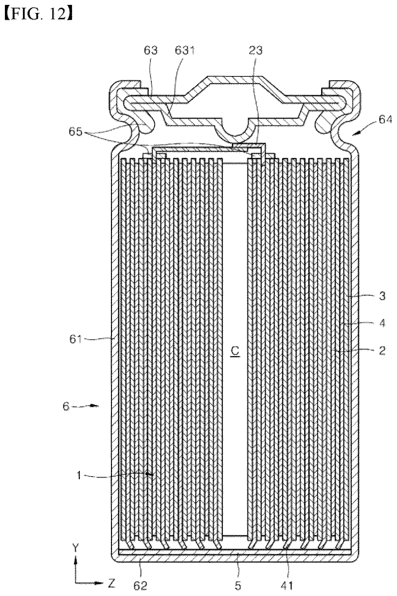

FIG. 11 and FIG. 12 respectively is a cross-sectional view showing a cylindrical cell in which one lateral surface of an electrode assembly in the axial direction thereof is covered with an insulation layer, in one embodiment, and a cross-sectional view showing a cylindrical cell in which a portion of a first electrode tab is only covered with an insulation layer, in one embodiment.

Referring to FIG. 11, cylindrical cell in one embodiment comprises a cell can 6 one lateral surface of which is open axially, and the electrode assembly 1 may be manufactured in a way that the second electrode uncoated portion 41 of the electrode assembly is accommodated in the cell can 6, to face a bottom surface 62 of the cell can 6. The second electrode uncoated portion 41 electrically connects to the cell can bottom surface 62. At this time, a current collection plate 5 may be interposed between the second electrode uncoated portion 41 and the cell can bottom surface 62. The second electrode uncoated portion 41 may connect directly to the cell can bottom surface 62, without the current collection plate 5, ensuring improvement in spatial availability and capacity.

A beading part 64 is provided at one side of the cell can 6, in which the electrode assembly 1 is accommodated, in the axial direction thereof, to fix the electrode assembly 1over the electrode assembly 1, and formed in a way that a lateral wall 61 of the cell can 61 is depressed inward. Over the beading part 64, cell can lead is provided to cover the open portion of one side of the cell can 6 in the axial direction thereof. The cell can lead is fixed by crimping with an insulation layer 65 interposed therebetween.

The first electrode tab 23 may protrude from one side of the electrode assembly 1 in the axial direction thereof and connect to a cell can lid 63 through a first electrode terminal 631. The first electrode terminal 631 may be provided additionally and connect to the lid 63 electrically, or may be provided as part of the lid 63, or may be the first electrode terminal 631, on its own.

A thermal runaway prevention device (a current interrupt device (CID)) and/or a venting structure may be together applied to the lid 63. The lid 63 may electrically connect to the first electrode terminal 631 through the thermal runaway prevention device (a current interrupt device (CID)) and/or the venting structure.

At this time, one lateral surface of the electrode assembly 1 in the axial direction thereof may be covered by the insulation layer 65, allowing the first electrode tab to protrude.

Referring to FIG. 12, the insulation layer 65 may be provided in a way that the insulation layer 65 covers a portion where the first electrode tab 23 is likely to interfere with the second electrode 4, preferably, a boundary portion where the first electrode tab 23 protrudes in the jelly roll portion of the electrode assembly 1, in addition to a space between the cell can lid 63 and the cell can 6, thereby improving spatial availability and capacity, than when the insulation layer 65 covers one lateral surface of the electrode assembly 1 entirely, as illustrated in FIG. 11.

In the cylindrical battery cell of one embodiment, the electrode assembly 1 in the embodiments may be accommodated in the cell can the upper side of which is open, with the second electrode uncoated portion 41 at the lower side, the second electrode uncoated portion 41 may electrically connect to the bottom surface 62 of the cell can 6, the first electrode tab may electrically connect to the lid 63 through the first electrode terminal 631 provided at the cell can lid 63 covering the upper portion of the cell can 6, and the insulation layer 65 may cover a portion where the first electrode tab 23 and the second electrode 41 are likely to cause a short circuit and covers between the lid 63 and the cell can 65.

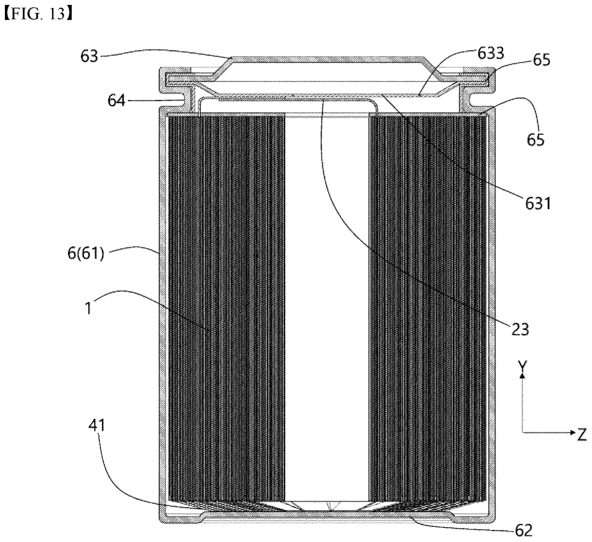

FIG. 13 shows that the second electrode uncoated portion 41 of the electrode assembly 1 directly welds to the bottom surface 62 of the cell can 6, in the state where the second electrode uncoated portion 41 bends and overlaps, and that two first electrode tabs 23 axially protrude in radially different positions, and welds to the first electrode terminal 631, for example.

The bottom surface 62 of the cell can 6 may be more concave and depressed further than the lower end portion of the lateral wall 61 of the cell can 6. The depressed portion may weld based on a method of irradiating a laser to the lower surface of the bottom surface 62, when welding to the second electrode uncoated portion 41. The depression structure of the bottom surface 62 prevents damage to the weld portion, caused by contact between the weld portion and the ground surface.

The first electrode terminal 631 may be provided with the venting structure 633 such as a notching groove where rigidity decreases. Compared to FIG. 4, FIG. 13 shows that a portion of the electrode assembly 1, in which an active material is applied right before the beading part 64, is provided to enhance energy density further.

The insulation layer 65 crimped together with the lid 63 is elongated axially and covers the inner circumference of the beading part. The inner circumference of the insulation layer 65 guides and collects the electrode tab 23 radially, and prevents the electrode tab 23 from contacting the lateral wall 61 of the cell can 6.

The cylindrical cell can 6 may be filled with electrolytes for a cell reaction. The electrolyte may be a salt having a structure of A⁺B⁻. Here, A⁺ includes an alkali metal cation such as Li⁺, Na⁺, or K⁺ or a combination thereof. In addition, B⁻ includes at least one anion selected from the group consisting of F⁻, Cl⁻, Br⁻, I⁻, NO₃⁻, N(CN)₂⁻, BF₄⁻, ClO₄⁻, AlO4⁻, AlCl₄⁻, PF₆⁻, SbF₆⁻, AsF₆⁻, BF₂C₂O₄; BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂) ₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte may also be used in a state of being dissolved in an organic solvent. As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof may be used.

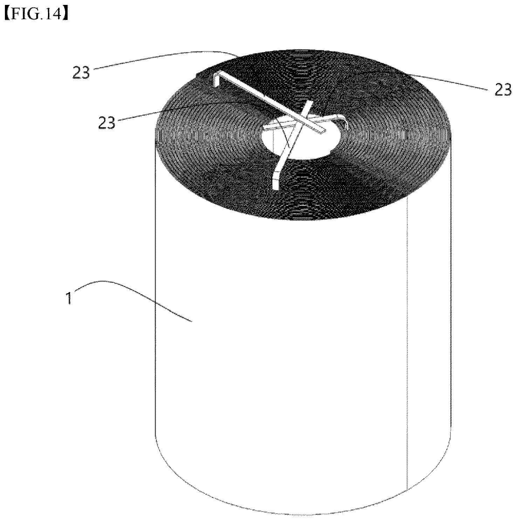

FIG. 14 shows an electrode assembly 1 in another embodiment. As illustrated in FIGS. 5 and 6, in the case where the electrode tab 23 connects to the area where the active material is applied axially, the radiuswise thickness of the circumferencewise area, where the electrode tab 23 is disposed, of the jelly roll is greater than the thickness of another portion, because of the thick electrode tab 23. In the embodiment, to minimize a deviation in the thicknesses, a plurality of electrode tabs 23 is disposed in a different position, circumferentially, for example. In the case where the plurality of electrode tabs 23 is disposed in a different position, circumferentially, it is preferable to dispose the plurality of electrode tabs 23 substantially at regular intervals. In the case where three electrode tabs 23 are provided as illustrated, an angle among them may be 120 degrees or so.

Certainly, a radiuswise distance of the plurality of electrode tabs 23 from the center of the electrode assembly 1 may differ as illustrated. The position selection of the electrode tab 23 is described with reference to FIGS. 5 and 6. A gap among the plurality of electrode tabs 23 in the radiuswise direction thereof may decrease gradually toward the centrifugal point from the centripetal point. Under the assumption that radii of the electrode tabs disposed from the centripetalmost side to the centrifugal side are r1, r2, r3 and r4, a relationship such as (r2-r1)> (r3-r2)> (r4-r3) may be formed.

All the plurality of electrode tabs 23 are elastically deformed in the centripetal direction, and a partial portion may overlap mutually. The plurality of electrode tabs may weld to the lid 63, at a time or consecutively.

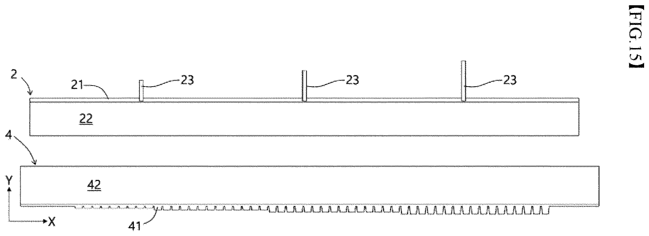

Referring to FIG. 15, a first electrode 2 is provided with a first electrode uncoated portion 21 where an active material is not applied, at one side thereof, in the axial direction thereof. A plurality of first electrode tabs 23 is fixed and electrically connected to a first electrode uncoated portion 21.

A second electrode 4 is provided with a second electrode uncoated portion 41 where an active material 42 is not applied, at the other side thereof, in the axial direction thereof. The axiswise elongated length of the second electrode uncoated portion 41 increases gradually or in stages, from the centripetal point to the centrifugal point. The second electrode uncoated portion 41 may be provided in the form of a notch tab, and the notch tab bends at base end thereof and lies radially.

A notch tab may not be provided in a certain section of the centripetalmost side and in a certain section of the centrifugalmost side. The portion where the notch tab is not provided does not bend. One turn at the centrifugal side may be removed to prevent the notch tab from being deformed unintentionally, during manufacturing.

The first electrode tab 23 is not elongated to the area where a first electrode active material 22 is applied in the widthwise direction Y. Even if the electrode assembly 1 is constituted by winding the first electrode 2, the second electrode 4 and a separation layer 3, the first electrode tab 23 is not interposed in the areas which the active material 22, 42 is applied to and contact compactly and densely in the radial direction. Then during charging and discharging, no area is affected by excessive pressure, preventing degradation, even if the radius of the jelly roll repeatedly expands and shrinks.

FIG. 15 shows that a first electrode uncoated portion 21 is provided in a way that the first electrode uncoated portion is elongated in the lengthwise direction, for example. In the structure, in the case where the first electrode uncoated portion 21 is too long, a short circuit is highly likely to occur, and in the case where the first electrode uncoated portion 21 is too short, a surface area where the first electrode uncoated portion 21 and the first electrode tab 23 are coupled is hardly be ensured.

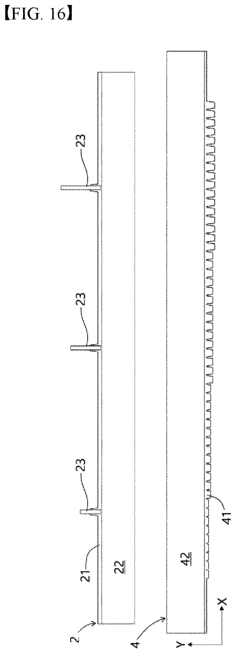

To solve the problem, FIG. 16 shows a structure in which the first electrode uncoated portion 21 is long only in the area where the first electrode tab 23 is coupled to the first electrode uncoated portion 21, and the first electrode uncoated portion 21 remains short in the areas where the first electrode tab 23 is not coupled to the first electrode uncoated portion 21. In the case where the first electrode uncoated portion 21 is short as described above, the first electrode uncoated portion 21 may not protrude further outward than the separation layer 3.

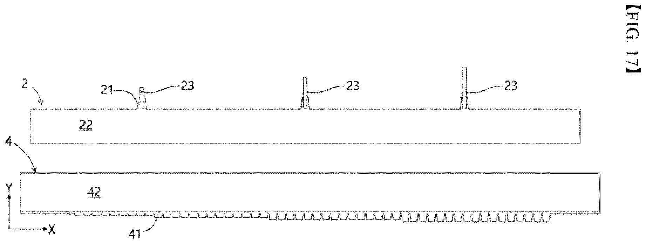

In the case where the first electrode uncoated portion 21 is all removed except for the area of the first electrode uncoated portion, where the first electrode tab 23 is coupled to the first electrode uncoated portion 21, as illustrated in FIG. 17, the surface area of the first electrode 2 contributing to an increase in electricity capacity may be maximized.

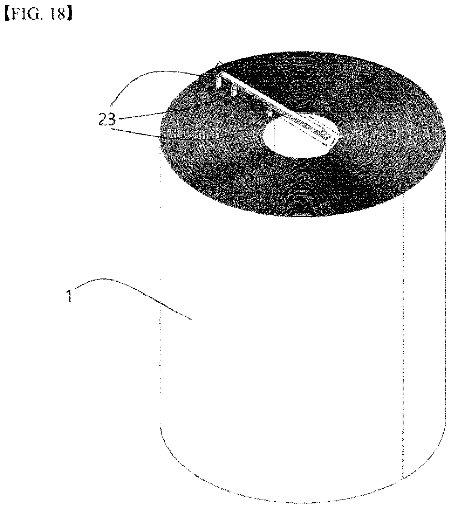

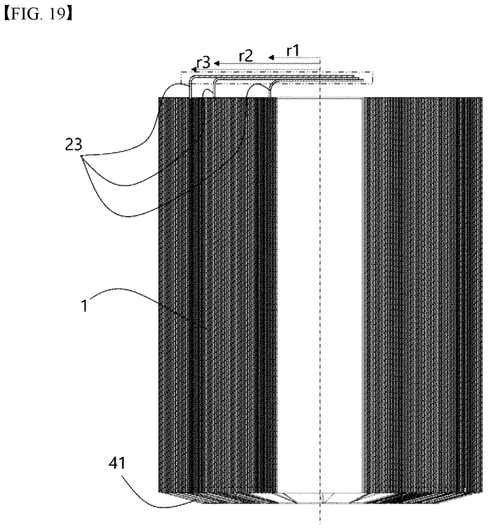

In the structure in which a plurality of first electrode tabs 23 protruding from one side of the first electrode uncoated portion 21 in the axial direction thereof connects to the first electrode uncoated portion, as illustrated in FIGS. 18 and 19, the first electrode tabs 23 may be disposed to be aligned mutually circumferentially. Since in the jelly roll, the first electrode tab 23 is disposed outside an active material coated portion, the plurality of first electrode tabs 23 do not need to be distributed circumferentially.

In the case where the plurality of first electrode tabs 23 are disposed in the substantially same position, circumferentially, the plate-shaped first electrode tabs 23 are disposed substantially in parallel with each other, and accordingly, bend side by side. Accordingly, the above-described structure is easy to weld to a lid 63 and to deal with after a welding, unlike the structure in which the plurality of first electrode tabs 23 are distributed along the circumferential direction. In particular, the plurality of first electrode tabs 23 are spaced from one another radially, but disposed on the same radial line, still producing the effect of reducing inner resistance.

In particular, when the first electrode tabs 23 contact and are connected to axially protruded first electrode uncoated portion 21 after winding the electrode assembly 1, in a state where the first electrode uncoated portion 21 is longer in a predetermined section or provided only in the predetermined section as illustrated in FIGS. 16 and 17 and the first electrode uncoated portion 21 of the predetermined section axially protrudes from one side of the electrode assembly at the position where the first electrode tab 23 needs to be provided, while the predetermined section is set to a large section considering a winding deviation, the circumferencewise position of the first electrode tab 23 can be aligned accurately.

Further, since the first electrode tabs 23 are collected in the smallest area while keeping a distance from one another properly radially, the insulation layer 65 can be formed to include the area only and installed easily, and the first electrode tabs 23 can firmly contact the first electrode uncoated portion 21 through the insulation layer 65, and other advantages may be ensured.

Even though the first electrode tabs 23 are provided in plural, the surface area of the lid 63, which is reserved for a weld to the first electrode tab 23, may be minimized, and the position of the surface area may be determined as an radially elongated portion (the area indicated by a dash double-dot line in FIGS. 18 and 19) at one position of the circumferential direction. Accordingly, the CID or venting structure may be readily applied to the lid 63 while the plurality of first electrode tabs 23 connects to the lid 63.

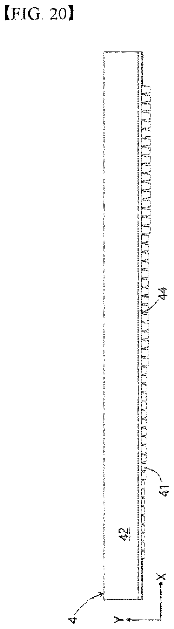

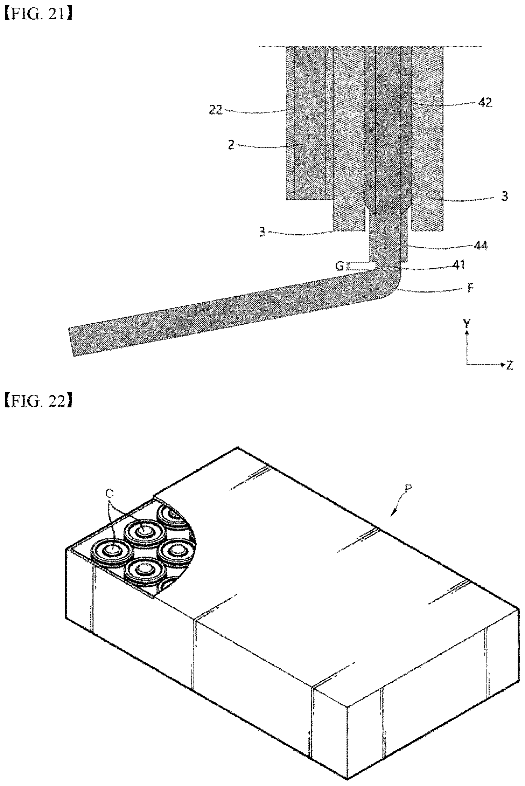

FIG. 20 is a planar view showing a second electrode uncoated portion 41 of a second electrode 4 where an insulation coating layer 44 is additionally coated. FIG. 21 is an enlarged view showing that the second electrode uncoated portion 41 on which the insulation coating layer in FIG. 20 is coated is wound and then bent.

The insulation coating layer 44 improves rigidity near base end of the second electrode uncoated portion 41. Accordingly, to weld the second electrode uncoated portion 41, as the second electrode uncoated portion 41 receives force axially, because of a second electrode current collection plate 52 or a bottom surface 62 of a cell can 6, the base end of the second electrode uncoated portion 41 may not be buckled.

As the insulation coating layer 44 improves the rigidity of the base end of the second electrode uncoated portion 41, the second electrode uncoated portion 41 and the first electrode 2 contact each other with the insulation coating layer 44 therebetween, without directly contacting each other, and the occurrence of a short circuit between the first electrode 2 and the second electrode 4 may be prevented, even though the buckling of the base end of the second electrode uncoated portion 41 occurs.

The insulation coating layer 44 provides bend resistance during the process of bending the second electrode uncoated portion 41 radially. Accordingly, at a time when the second electrode uncoated portion 41 bends radially, a section of the second electrode uncoated portion 41, on which the insulation coating layer 44 is coated, is not almost deformed, and the section of the second electrode uncoated portion 41, on which the insulation coating layer 44 is not coated, is mainly deformed.

The insulation coating layer 44 covers a predetermined section from a boundary portion between the second electrode active material coated portion 42 and the second electrode uncoated portion 41 toward the end portion of the second electrode uncoated portion 41. The insulation coating layer 44 is elongated from a position further inward than the end portion of the separation layer 3 in the axial direction thereof to a position further outward than the separation layer 3 in the axial direction thereof.

The insulation coating layer 44 also covers a micro section of the end portion of the second electrode active material coated portion 42 when covering the boundary portion between the second electrode active material coated portion 42 and the second electrode uncoated portion 41. The portion that is significantly deformed due to buckling may be the boundary portion between the second electrode active material coated portion 42 and the second electrode uncoated portion 41. Since the insulation coating layer 44 also covers the micro section of the end portion of the second electrode active material coated portion 42 in the boundary portion, the insulation coating layer 44 significantly increases the buckling resistance in the boundary portion between the second electrode active material coated portion 42 and the second electrode uncoated portion 41.

The insulation coating layer 44 is coated to have a predetermined thickness, or a thickness that changes axially. FIG. 21 shows a structure in which the thickness of the insulation coating layer 44 increases gradually in a glide section (a section in which the thickness decreases) that is formed in the end portion of a negative electrode active material.

The thickness of the insulation coating layer 44 may be less than the thickness of the negative electrode active material. Accordingly, the second electrode active material coated portion 42 closely contacts the separation layer 3 radially, but the insulation coating layer 44 may be spaced from the separation layer 3 to some degree, or may contact the separation layer 3 but not closely contact the separation layer 3, as illustrated.

Then, even if the base end of the second electrode uncoated portion 41 is deformed, during the processes of bending the second electrode uncoated portion 41 and welding the second electrode current collection plate 52 to the second electrode uncoated portion 41, at which external force is applied to the second electrode uncoated portion 41, the deformation amount may be suppressed, and the deformation of the base end of the second electrode uncoated portion 41 does not affect the separation layer 3. That is, the second electrode uncoated portion 41 has a section which corresponds to a gap between the insulation coating layer 44 and the separation layer 3, and in which deformation is allowable without affecting the separation layer 3.

When the insulation coating layer 44 is spaced from the separation layer 3, it prevents the direct conduction of heat, generated during the process of welding the second electrode uncoated portion 41 to the second electrode current collection plate 52 or the bottom surface 62 of the cell can 6, to the separation layer 3 through the insulation coating layer 44, and protects the separation layer 3 from the weld heat. Further, since the axiswise height of the separation layer 3 may be shorter with the help of the insulation coating layer 44, a distance from the position where the weld heat is generated to the axiswise end portion of the separation layer 3 may increase, ensuring improvement in the protection of the separation layer 3 from the weld heat.

Since the electrode assembly 1 is wound in a cylindrical shape, the insulation coating of the second electrode uncoated portion 41 on which the insulation coating layer 44 is coated also has a cylindrical curved surface. The cylindrical curved surface itself has bend resistance. In the embodiments, since the insulation coating area has a cylindrical curved surface that is thicker than the uncoated portion..., the insulation coating area provides higher bend resistance at a time when an area on the cylindrical curved surface bends radially. Thus, a portion of the second electrode uncoated portion 41, on which insulation coating is not applied, bends.

At this time, even if the insulation coating layer 44 is not supported by the separation layer 3 while the thickness of the insulation coating layer 44 is less than the thickness of the negative electrode active material layer such that the surface of the insulation coating layer 44 is spaced from the separation layer 3 radially, the insulation coating layer may exert bend resistance sufficiently since the insulation coating area provides higher bend resistance.

The front end of the insulation coating layer 44 is coated in a way that the front end of the insulation coating layer 44 slightly keeps a gap G from the bend portion F of the second electrode uncoated portion 41. This leads the second electrode uncoated portion 41 to bend in the bend portion F. Further, since the second electrode uncoated portion 41 is deformed with a slight gap G from the insulation coating layer 44, preventing damage to the insulation coating layer 44, caused by the process of bending the uncoated portion.

The bucking of the second electrode uncoated portion 41 provided with the insulation coating layer 44 may be prevented even if the second electrode uncoated portion is pressurized axially.

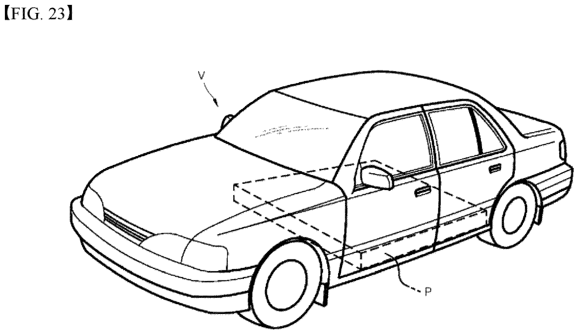

FIGS. 22 and 23 are a perspective view showing a battery pack comprising a cylindrical battery cell in the present disclosure and a perspective view showing a vehicle comprising the battery pack in FIG. 22. Referring to FIGS. 22 and 23, the electrode assembly and the cylindrical battery cell C in the present disclosure may be applied to a battery pack P comprising the electrode assembly and the cylindrical battery cell C, and a vehicle V comprising the battery pack P. Embodiments of the battery pack P and the vehicle V are well known to one having ordinary skill in the art, and description in relation to them is omitted.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

The embodiments are described above with reference to a number of illustrative embodiments thereof. However, embodiments are not limited to the embodiments and drawings set forth herein, and numerous other modifications and embodiments can be drawn by one skilled in the art within the technical scope of the disclosure. Further, the effects and predictable effects based on the configurations in the disclosure are to be included within the scope of the disclosure though not explicitly described in the description of the embodiments.

## Claims

1. An electrode assembly in which an electrode stack, where a first electrode, a separation layer, a second electrode and a separation layer are consecutively stacked, is wound around a winding axis in a winding direction, in a jelly roll shape, comprising;
a first electrode tab electrically connecting to the first electrode; and
a second electrode uncoated portion which is provided in a portion of the second electrode and on which an active material is not coated,
wherein the first electrode tab protrudes from one side further axially than the first electrode, and
the second electrode uncoated portion being exposed to an end portion of other side of the second electrode in an axial direction thereof and serving as a tab.

2. The electrode assembly of claim 1, wherein one or two or more of the first electrode tabs are provided.

3. The electrode assembly of claim 2, wherein two or more of the first electrode tabs overlap each other and electrically connect to one another to form a single tab.

4. The electrode assembly of claim 2, wherein one first electrode tab connects to the first electrode in a position where the first electrode tab avoids both end portions of the first electrode in a winding direction thereof.

5. The electrode assembly of claim 2, wherein two or more of the first electrode tabs connect to the first electrode in a position where two or more of the first electrode tabs avoid both end portions and a central portion of the first electrode in a winding direction thereof.

6. The electrode assembly of claim 1, wherein the first electrode tab contacts a first electrode uncoated portion on which an active material is not coated.

7. The electrode assembly of claim 6, wherein the first electrode uncoated portion is provided in an area corresponding to an area on which an active material is coated axially.

8. The electrode assembly of claim 6, wherein the first electrode uncoated portion is elongated from an end portion of an area on which an active material is coated in an axial direction thereof toward an outside of the area in the axial direction thereof.

9. The electrode assembly of claim 8, wherein the first electrode uncoated portion is provided entirely at the electrode assembly or at part of the electrode assembly in a lengthwise direction.

10. The electrode assembly of claim 8, wherein outwardly axial extending length of the first electrode uncoated portion in a predetermined section comprising a potion contacted by the first electrode tab is greater than that of the first electrode uncoated portion in a remaining section.

11. The electrode assembly of claim 7 or 8, wherein a plurality of first electrode tabs is provided, and
the plurality of first electrode tabs is disposed in a different radial position, radially.

12. The electrode assembly of claim 7, wherein a plurality of first electrode tabs is provided, and
circumferencewise positions of the plurality of first electrode tabs do not overlap.

13. The electrode assembly of claim 8, wherein a plurality of first electrode tabs is provided, and
circumferencewise positions of the plurality of first electrode tabs overlap at least partially.

14. The electrode assembly of claim 1, wherein an axiswise length of the first electrode is less than axiswise lengths of an area of the second electrode, on which an active material is coated, and a separation layer.

15. The electrode assembly of claim 14, wherein an end portion of one side of the first electrode in an axial direction thereof and an end portion of one side of the second electrode in an axial direction thereof are disposed at the same height, or the end portion of one side of the first electrode in the axial direction thereof is disposed lower than the end portion of one side of the second electrode in the axial direction thereof.

16. The electrode assembly of claim 15, wherein an axiswise distance between the axiswise end portion of one side of the first electrode and the axiswise end portion of one side of the second electrode in the axial direction thereof is less than an axiswise distance between an axiswise end portion of the other side of the first electrode and a point of the second electrode, at which the second electrode uncoated portion starts.

17. The electrode assembly of claim 1, wherein second electrode uncoated portion is formed in a way that the second electrode uncoated portion is notched continuously or discontinuously in the winding direction.

18. The electrode assembly of claim 1, wherein a height at which the second electrode uncoated portion protrudes axially increases continuously or discontinuously.

19. The electrode assembly of claim 1, wherein the second electrode uncoated portion bends radially.

20. The electrode assembly of claim 19 wherein a current collection plate is coupled to a surface of the second electrode uncoated portion bent.

21. A cylindrical cell comprising the electrode assembly of any one of claims 1 to 20.

22. The cylindrical cell of claim 21, comprising:
a cell can having an axiswise one side that is open, and accommodating the electrode assembly with the second electrode uncoated portion facing a bottom;
a cell can lid covering the open upper portion of the cell can in a state where the electrode assembly is accommodated in the cell can; and
an insulation layer insulating the first electrode tab from the cell can and an axial end portion of the second electrode,
wherein the first electrode tab electrically connects to the cell can lid, and
the second electrode uncoated portion electrically connects to a bottom surface of the cell can.

23. The cylindrical cell of claim 22, wherein a beading part is provided on a lateral surface of the cell can, protrudes inward radially, and fixes the electrode assembly vertically, and
the insulation layer is disposed between the beading part and the electrode assembly.

24. The cylindrical cell of claim 22, wherein the insulation layer covers one lateral surface of the electrode assembly in an axial direction thereof, and the first electrode tab passes through the insulation layer and protrudes from one side axially.

25. The cylindrical cell of claim 22, wherein the insulation layer is provided in a boundary portion between the first electrode tab and the second electrode and between the first electrode tab and the cell can.
